# EUROPÄISCHE PATENTSCHRIFT

(11) **EP 3 881 499 B1**
(45) Veröffentlichungstag und Bekanntmachung des Hinweises auf die Patenterteilung: **02.04.2025**
(21) Anmeldenummer: 19804675.7
(22) Anmeldetag: 11.11.2019
(51) Int. Cl.: H04L 12/413, H04L 12/40

(54) **FEHLERRAHMENABSCHIRMEINHEIT FÜR EINE TEILNEHMERSTATION EINES SERIELLEN BUSSYSTEMS UND VERFAHREN ZUR KOMMUNIKATION IN EINEM SERIELLEN BUSSYSTEM**
ERROR FRAME SCREENING UNIT FOR A SUBSCRIBER STATION OF A SERIAL BUS SYSTEM AND METHOD FOR COMMUNICATION IN A SERIAL BUS SYSTEM
UNITÉ DE PROTECTION CONTRE LES TRAMES D'ERREUR POUR UNE STATION D'ABONNÉ D'UN SYSTÈME DE BUS SÉRIE ET PROCÉDÉ DE COMMUNICATION DANS UN SYSTÈME DE BUS SÉRIE

(30) Priorität: 12.11.2018 DE 102018219292
(43) Veröffentlichungstag der Anmeldung: 22.09.2021
(73) Patentinhaber: Robert Bosch GmbH, 70442 Stuttgart (DE)
(72) Erfinder: WALKER, Steffen, 72770 Reutlingen (DE); MUTTER, Arthur, 73765 Neuhausen (DE); VAFI, Darius, 38108 Braunschweig (DE)
(86) Internationale Anmeldenummer: PCT/EP2019/080866
(87) Internationale Veröffentlichungsnummer: WO 2020/099318

(56) Entgegenhaltungen:
- EP-A1- 2 800 316
- DE-A1- 102013 220 377

## Beschreibung

### Technisches Gebiet

Die vorliegende Erfindung betrifft eine Fehlerrahmenabschirmeinheit für eine Teilnehmerstation eines seriellen Bussystems und ein Verfahren zur Kommunikation in einem seriellen Bussystem, mit welchen eine Kommunikation in dem Bussystem gemäß wahlweise einem ersten Kommunikationsprotokoll oder einem zweiten Kommunikationsprotokoll möglich ist, wobei die Kommunikation gemäß dem zweiten Kommunikationsprotokoll mit einer höheren Bitrate als mit dem ersten Kommunikationsprotokoll und mit einem anderen Physical Layer erfolgt.

### Stand der Technik

Derzeit wird für die Kommunikation zwischen Sensoren und Steuergeräten, beispielsweise in Fahrzeugen, immer häufiger ein Bussystem eingesetzt, in welchem Daten als Nachrichten im Standard IS011898-1:2015 als CAN Protokoll-Spezifikation mit CAN FD übertragen werden. Die Nachrichten werden zwischen den Teilnehmerstationen des Bussystems, wie Sensor, Steuergerät, Geber, usw., übertragen. Hierbei wird CAN FD derzeit in der Einführungsphase im ersten Schritt meist mit einer Daten-Bitrate von 2Mbit/s bei der Übertragung von Bits des Datenfelds und mit einer Arbitrations-Bitrate von 500kbit/s bei der Übertragung aller anderen Bits, insbesondere der Bits des Arbitrationsfelds, im Fahrzeug eingesetzt.

Sowohl bei der Übertragung des Arbitrationsfelds als auch bei der Übertragung des Datenfelds wird derselbe Physical Layer verwendet, welcher der Bitübertragungsschicht oder Schicht 1 des bekannten OSI-Modells (Open Systems Interconnection Modell) entspricht. Dabei werden zwei Buszustände unterschieden, nämlich "dominant" (entspricht der logischen bzw. digitalen 0) und "rezessiv" (entspricht der logischen bzw. digitalen 1). Da der rezessive Buszustand nicht aktiv getrieben wird, kann der rezessive Buszustand von dem dominanten Buszustand überschrieben werden, wodurch die Arbitration ermöglicht wird. Jedoch wird der rezessive Buszustand nur relativ langsam durch Abschlusswiderstände des Bussystems eingestellt. Dies verhindert auf der einen Seite eine schnellere Datenübertragung. Auf der anderen Seite gewährleistet die Arbitration gemäß dem oben genannten Standard IS011898-1:2015 jedoch, dass während der Übertragung des Datenfelds nur eine der Teilnehmerstationen ihre Daten exklusiv und kollisionsfrei sendet. Dadurch sind Daten nach der Arbitration sicherer ohne Notwendigkeit der Wiederholung über den Bus übertragbar. Dies trägt insgesamt mit zu einer Beschleunigung der Datenübertragung bei.

Soll also der Vorteil der Arbitration beibehalten werden und dennoch die Übertragungsrate noch weiter als bisher erhöht werden, muss eine Lösung gefunden werden, welche die Nachteile der langsamen Übertragungsrate bei der Arbitration gemäß dem oben genannten Standard IS011898-1:2015 vermindert. Dabei soll für eine einfache Migration bestehender Bussysteme außerdem ermöglicht werden, dass Teilnehmerstationen, die noch gemäß den bestehenden CAN-Protokoll-Spezifikationen arbeiten, im Bussystem auch mit Teilnehmerstationen koexistieren können, die bereits gemäß einer Nachfolge-CAN-Protokoll-Spezifikation kommunizieren.

EP 2 800 316 A1 zeigt eine Vorrichtung, welche es einem CAN 2.0B Controller ermöglicht, passiv an einer CAN FD Kommunikation teilzunehmen, indem der CAN 2.0B Controller absichtlich in einen Fehlerpassivzustand (error passive state) versetzt wird oder bis zum Ende des CAN FD Rahmens Overload Rahmen erzeugt werden.

DE 10 2013 220 377 A1 offenbart eine Anpasseinrichtung, welche einen Dummy-Rahmen an einen Controller ausgibt, falls eine vom Bus empfangene Nachricht eine Nachricht gemäß der CAN FD Spezifikation ist, und einen von dem Controller ausgegebenen Fehlerrahmen blockiert.

### Offenbarung der Erfindung

Daher ist es Aufgabe der vorliegenden Erfindung, eine Fehlerrahmenabschirmeinheit für eine Teilnehmerstation eines seriellen Bussystems und ein Verfahren zur Kommunikation in einem seriellen Bussystem bereitzustellen, welche die zuvor genannten Probleme lösen. Insbesondere sollen eine Fehlerrahmenabschirmeinheit für eine Teilnehmerstation eines seriellen Bussystems und ein Verfahren zur Kommunikation in einem seriellen Bussystem bereitgestellt werden, bei welchen auch eine Koexistenz von Teilnehmerstationen möglich ist, die gemäß dem Standard IS011898-1:2015 oder gemäß einer Nachfolge-CAN-Protokoll-Spezifikation kommunizieren.

Die Aufgabe wird durch eine Fehlerrahmenabschirmeinheit für eine Teilnehmerstation eines seriellen Bussystems mit den Merkmalen von Anspruch 1 gelöst. Die Fehlerrahmenabschirmeinheit hat einen Abschirmentscheidungsblock zur Erzeugung eines Signals, das während einer Übertragung einer Nachricht auf einem Bus des Bussystems angibt, ob ein Sendesignal, das von der Teilnehmerstation aufgrund des Empfangs der Nachricht erstellt wurde, auf den Bus gesendet werden soll oder nicht, und einem Sendesignal-Auswahlblock zur Blockierung des Sendesignals, das mit einem Fehlerrahmen auf dem Bus einen Empfangsfehler in der vom Bus empfangenen Nachricht anzeigen soll, in Abhängigkeit des von dem Abschirmentscheidungsblock erzeugten Signals, so dass der Fehlerrahmen nicht auf den Bus gesendet wird, wie in Anspruch 1 beschrieben.

Mit der Fehlerrahmenabschirmeinheit wird ermöglicht, dass erste Teilnehmerstationen des Bussystems, die in einer ersten Kommunikationsphase das gleiche Kommunikationsformat verwenden wie zweite Teilnehmerstationen, jedoch in einer zweiten Kommunikationsphase ein anderes Kommunikationsformat verwenden als die zweiten Teilnehmerstationen, die Kommunikation der zweiten Teilnehmerstationen nicht stören. Hierfür kann die Fehlerrahmenabschirmeinheit Fehlerrahmen (Error-Flags) der eigenen Teilnehmerstation in der Datenphase als der zweiten Kommunikationsphase vom Bus abschirmen. Jedoch ist die Verwendung von Fehlerrahmen (Error-Flags) in der Arbitrationsphase als erster Kommunikationsphase möglich.

Somit ist in einer ersten Kommunikationsphase eine von CAN bekannte Arbitration durchführbar und dennoch in einer zweiten Kommunikationsphase die Übertragungsrate gegenüber CAN FD beträchtlich steigerbar. Dadurch kann auch bei Verwendung von unterschiedlichen Physical Layern in der Datenphase eine Kommunikation von Fehlern via Fehlerrahmen (Error-Flags) in der Arbitrationsphase durchgeführt werden.

Die Teilnehmerstation ermöglicht, dass durch ein Senden des in CAN FD vorhandenen "res-Bit:=1" zu einem neuen Rahmenformat umgeschaltet werden kann und danach aufgrund der Fehlerrahmenabschirmeinheit bei einem Fehler die Kommunikation in dem neuen Rahmenformat nicht durch Fehlerrahmen (Error Flag) auf dem Bus gestört wird.

Durch die Koexistenz und Interoperabilität von Teilnehmerstationen, die gemäß dem CAN FD -Kommunikationsprotokoll arbeiten, und Teilnehmerstationen, die gemäß einem CAN FD Nachfolger-Kommunikationsprotokoll arbeiten, das nachfolgend CAN NG genannt ist, ist ein nahtloser Migrationspfad von CAN FD zu CAN NG hin möglich. Somit können einzelne Teilnehmerstationen des Bussystems, die weiterhin nur CAN FD verwenden sollen, mit der zuvor beschriebenen Fehlerrahmenabschirmeinheit nachgerüstet werden, wobei die CAN NG Teilnehmerstationen, die auch CAN FD Rahmen senden und empfangen können, von vorneherein mit der Fehlerrahmenabschirmeinheit ausgestattet werden können. Daher sind keine Gateways zwischen CAN FD und CAN NG Bussystemen erforderlich.

Vorteilhafte weitere Ausgestaltungen der Fehlerrahmenabschirmeinheit sind in den abhängigen Ansprüchen angegeben.

Die zuvor beschriebene Fehlerrahmenabschirmeinheit hat einen Datenphase-Erfassungsblock zur Erfassung der Datenphase der auf dem Bus seriell übertragenen Nachricht, und einen Sender-Erfassungsblock zur Erfassung, ob die Teilnehmerstation derzeit der Sender der Nachricht ist oder nicht, wobei der Abschirmentscheidungsblock ausgestaltet ist, das Signal als Reaktion auf ein Erfassungsergebnis des Datenphase-Erfassungsblocks und ein Erfassungsergebnis des Sender-Erfassungsblocks zu erzeugen.

Gemäß einer Option ist der Datenphase-Erfassungsblock ausgestaltet, zur Erfassung der Datenphase einen Zustand auf dem Bus zu erfassen. Gemäß einer anderen Option ist der Datenphase-Erfassungsblock ausgestaltet, zur Erfassung der Datenphase ein digitales Empfangssignal auszuwerten, das aus der vom Bus empfangenen Nachricht erzeugt wird.

Möglicherweise ist der Sender-Erfassungsblock ausgestaltet, ein Sendesignal auszuwerten, das von der Teilnehmerstation zu dem Bus gesendet wird. Hierbei kann der Sender-Erfassungsblock ausgestaltet sein, zur Auswertung des Sendesignals Flankenwechsel des Sendesignals zu zählen. Alternativ oder zusätzlich kann der Sender-Erfassungsblock ausgestaltet sein, zur Auswertung des Sendesignals eine sequentielle Dekodierung des Sendesignals auszuführen. Alternativ oder zusätzlich kann der Sender-Erfassungsblock ausgestaltet sein, zur Auswertung des Sendesignals das Sendesignal mit einem digitalen Empfangssignal zu vergleichen, das aus der vom Bus empfangenen Nachricht erzeugt wird.

Denkbar ist, dass die Fehlerrahmenabschirmeinheit zudem einen Empfangssignal-Entscheidungsblock zum Entscheiden aufweist, welches Empfangssignal die Fehlerrahmenabschirmeinheit an die eigene Teilnehmerstation weitergibt, wobei der Empfangssignal-Entscheidungsblock ausgestaltet ist, die Entscheidung zu treffen in Abhängigkeit von einem Ergebnis, ob die Teilnehmerstation einen Fehlerrahmen sendet, sowie in Abhängigkeit von dem von dem Abschirmentscheidungsblock erzeugten Signal.

Gemäß einer speziellen Variante hat die Fehlerrahmenabschirmeinheit zudem einen Sendesignal-Erzeugungsblock zum Erzeugen eines Sendesignals, in welchem nach einer Datenphase der Nachricht signalisiert ist, dass bei der Teilnehmerstation ein Empfangsfehler erfasst wurde, wobei der Sendesignal-Erzeugungsblock ausgestaltet ist, das Sendesignal zu erzeugen und zum Bus zu senden, falls das von dem Empfangssignal-Entscheidungsblock erzeugte Signal angibt, dass der Fehlerrahmen zum Senden auf den Bus blockiert wurde.

In einer ersten Kommunikationsphase zur Übertragung der Nachricht auf den Bus wird zwischen den Teilnehmerstationen des Bussystems ausgehandelt, welche der Teilnehmerstationen in einer nachfolgenden zweiten Kommunikationsphase zumindest zeitweise einen exklusiven, kollisionsfreien Zugriff auf den Bus des Bussystems hat, wobei die zweite Kommunikationsphase eine Datenphase ist, in welcher Nutzdaten der Nachricht auf dem Bus übertragen werden.

Die zuvor beschriebene Fehlerrahmenabschirmeinheit kann Teil einer Teilnehmerstation für ein serielles Bussystem sein, wobei die Teilnehmerstation zudem aufweist eine Kommunikationssteuereinrichtung zum Senden einer Nachricht zu einem Bus des Bussystems und/oder zum Empfangen einer Nachricht von dem Bus des Bussystems, und einer Sende- / Empfangseinrichtung zum Senden der Nachricht auf den Bus, wobei die Fehlerrahmenabschirmeinheit mit der Kommunikationssteuereinrichtung und der Sende- / Empfangseinrichtung verschaltet ist, wobei die Sende- / Empfangseinrichtung ausgestaltet ist, beim Senden mit einer ersten Bitrate, einen ersten Buszustand für einen ersten digitalen Datenzustand der Nachrichten zu erzeugen und einen zweiten Buszustand für den zweiten digitalen Datenzustand der Nachrichten derart zu erzeugen, dass der zweite Buszustand den ersten Buszustand überschreiben kann, und wobei die Sende- / Empfangseinrichtung ausgestaltet ist, beim Senden mit einer zweiten Bitrate, die höher ist als die erste Bitrate, unterschiedliche Buszustände derart zu erzeugen, dass die Buszustände für die unterschiedlichen digitalen Datenzustände der Nachrichten einander nicht überschreiben können, und wobei die Fehlerrahmenabschirmeinheit ausgestaltet ist zu erfassen, wann die Sende- / Empfangseinrichtung vom Senden mit der ersten Bitrate zum Senden mit der zweiten Bitrate umschaltet und vom Senden mit der zweiten Bitrate zum Senden mit der ersten Bitrate umschaltet.

Mindestens zwei zuvor beschriebene Teilnehmerstationen können Teil eines Bussystems sein, das zudem einen Bus aufweist, so dass die mindestens zwei Teilnehmerstationen über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Das zuvor beschriebene Bussystem hat möglicherweise zudem mindestens eine zusätzliche Teilnehmerstation, welche zur Übertragung der Nachricht auf dem Bus nur ausgestaltet ist, in einer ersten und zweiten Kommunikationsphase der Nachricht Buszustände derart auf dem Bus zu erzeugen, dass der zweite Buszustand den ersten Buszustand überschreiben kann, wobei die mindestens eine zusätzliche Teilnehmerstation über den Bus mit den mindestens zwei Teilnehmerstationen derart verbunden ist, dass die Teilnehmerstationen seriell miteinander kommunizieren können, wobei die mindestens eine zusätzliche Teilnehmerstation eine zuvor beschriebene Fehlerrahmenabschirmeinheit aufweist, wobei die Fehlerrahmenabschirmeinheit der mindestens einen der zuvor beschriebenen Teilnehmerstationen und der mindestens einen zusätzlichen Teilnehmerstation ausgestaltet ist, einen Fehlerrahmen zu blockieren, wenn das von dem Abschirmentscheidungsblock erzeugte Signal anzeigt, dass derzeit in der zweiten Kommunikationsphase eine Nachricht empfangen wird, deren Format eine Kommunikationssteuereinrichtung der Teilnehmerstation aufgrund eines Fehlers nicht verstehen kann, und wenn die Kommunikationssteuereinrichtung der mindestens einen zusätzlichen Teilnehmerstation währenddessen versucht, einen Fehlerrahmen zu senden.

Die zuvor genannte Aufgabe wird zudem durch ein Verfahren zur Kommunikation in einem seriellen Bussystem nach Anspruch 13 gelöst. Das Verfahren hat die Schritte: Senden, mit einer Sende- / Empfangseinrichtung, von Nachrichten auf einen Bus des Bussystems und/oder Empfangen, mit der Sende- / Empfangseinrichtung, von Nachrichten von dem Bus des Bussystems, Erzeugen, mit einem Abschirmentscheidungsblock, eines Signals, das beim Empfang einer Nachricht von dem Bus angibt, ob ein Sendesignal, das von der Teilnehmerstation aufgrund des Empfangs der Nachricht erstellt wurde, auf den Bus gesendet werden soll oder nicht, und Blockieren, mit einem Sendesignal-Auswahlblock, des Sendesignals, das mit einem Fehlerrahmen auf dem Bus einen Empfangsfehler in der vom Bus empfangenen Nachricht anzeigen soll, in Abhängigkeit des von dem Abschirmentscheidungsblock erzeugten Signals, so dass der Fehlerrahmen nicht auf den Bus gesendet wird, wie in Anspruch 13 beschrieben.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von Teilnehmerstationen des Bussystems gemäß dem ersten Ausführungsbeispiel gesendet werden können;
Fig. 3 ein Schaubild zur Veranschaulichung des Aufbaus einer Fehlerrahmenabschirmeinheit, die bei Teilnehmerstationen des Bussystems gemäß dem ersten Ausführungsbeispiel eingebaut ist; und
Fig. 4 ein Signalzeitdiagramm für verschiedene Signale, die im Betrieb des Bussystems gemäß dem ersten Ausführungsbeispiel gesendet werden.

In den Figuren sind gleiche oder funktionsgleiche Elemente, sofern nichts Anderes angegeben ist, mit denselben Bezugszeichen versehen.

### Beschreibung der Ausführungsbeispiele

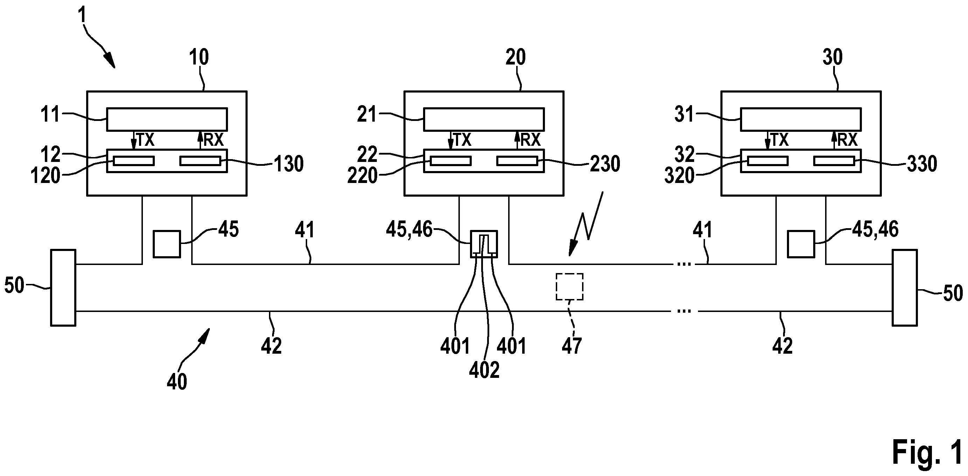

Fig. 1 zeigt als Beispiel ein Bussystem 1, das insbesondere grundlegend für ein CAN-Bussystem, ein CAN FD-Bussystem, ein CAN FD-Nachfolgebussystem, das auch als CAN NG Bussystem bezeichnet wird, und/oder Abwandlungen davon, ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Der Bus 40 ist an seinen beiden Enden mit Abschlusswiderständen 50 abgeschlossen. Die Busadern 41, 42 können auch CAN_H und CAN_L genannt werden und dienen, unter Verwendung eines TX-Signals im Sendezustand, zur elektrischen Signalübertragung nach Einkopplung der dominanten Pegel bzw. Zustände 401 oder Erzeugung bzw. aktivem Treiben von rezessiven Pegeln bzw. Zuständen 402. Die Zustände 401, 402 sind nur bei der Teilnehmerstation 20 sehr schematisch gezeigt. Die Zustände 401, 402 entsprechen den Zuständen eines TX-Signals einer sendenden Teilnehmerstation 10, 20, 30. Nach Übertragung der Signale CAN_H und CAN_L auf den Busadern 41, 42 werden die Signale von den Teilnehmerstationen 10, 20, 30 als ein RX-Signal empfangen. Über den Bus 40 sind Nachrichten 45, 46 in der Form der Signale CAN_H und CAN_L zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11 und eine Sende- / Empfangseinrichtung 12 mit einer Sende- / Empfangseinheit 120 und einer Fehlerrahmenabschirmeinheit 130. Die Teilnehmerstation 20 hat dagegen eine Kommunikationssteuereinrichtung 21 und eine Sende- / Empfangseinrichtung 22 mit einer Sende- / Empfangseinheit 220 und einer Fehlerrahmenabschirmeinheit 230. Die Teilnehmerstation 30 hat eine Kommunikationssteuereinrichtung 31 und eine Sende- / Empfangseinrichtung 32 mit einer Sende- / Empfangseinheit 320 und einer Fehlerrahmenabschirmeinheit 330. Die Sende- / Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit einer anderen Teilnehmerstation der Teilnehmerstationen 10, 20, 30, die an den Bus 40 angeschlossen sind.

Die Kommunikationssteuereinrichtung 11 kann wie ein herkömmlicher CAN FD-Controller ausgeführt sein. Die Kommunikationssteuereinrichtung 11 erstellt und liest erste Nachrichten 45, die beispielsweise CAN FD Nachrichten sind. Die CAN FD Nachricht 45 ist gemäß dem CAN FD Format aufgebaut, bei welcher eine Anzahl von bis zu 64 Datenbytes umfasst sein können, die mit einer deutlich schnelleren und damit höheren Datenrate als bei einer Classical CAN-Nachricht übertragen werden. Die Sende- / Empfangseinrichtung 12 kann bis auf die nachfolgend beschriebenen Unterschiede in Bezug auf die Fehlerrahmenabschirmeinheit 130 wie ein herkömmlicher CAN FD Transceiver ausgeführt sein.

Jede der Kommunikationssteuereinrichtungen 21, 31 erstellen und/oder lesen die ersten Nachrichten 45 oder zweite Nachrichten 46. Die zweiten Nachrichten 46 sind auf der Grundlage eines CAN NG-Formats aufgebaut, das nachfolgend detaillierter beschrieben ist. Jede der Sende- / Empfangseinrichtungen 22, 32 hat eine CAN Sende- / Empfangseinheit 220, 320, die je nach Bedarf eine der zuvor beschriebenen ersten Nachrichten 45 im CAN FD Format oder eine zweite Nachricht 46 gemäß dem CAN NG-Format für die zugehörige Kommunikationssteuereinrichtung 21, 31 bereitstellen oder von dieser empfangen kann. Zusätzlich sind die nachfolgend noch genauer beschriebenen Fehlerrahmenabschirmeinheiten 230, 330 umfasst.

Mit den beiden Teilnehmerstationen 20, 30 ist eine Bildung und dann Übertragung von Nachrichten 46 mit dem CAN NG Format sowie der Empfang solcher Nachrichten 46 realisierbar.

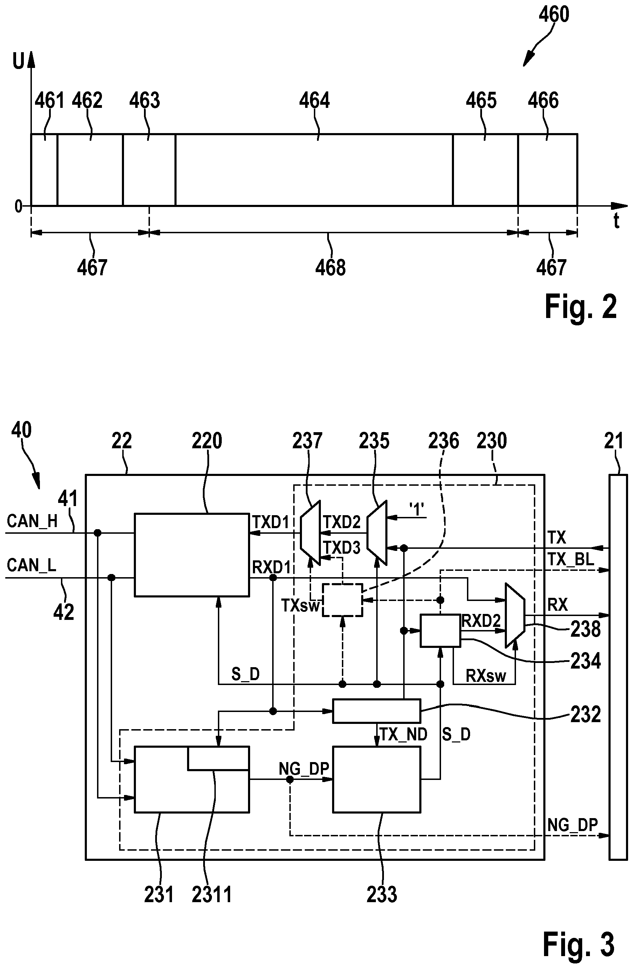

Fig. 2 zeigt für die Nachricht 46 einen CAN NG Rahmen 460, wie er von der Sende- / Empfangseinrichtung 22 oder der Sende- / Empfangseinrichtung 32 infolge eines TX-Signals als Differenzsignal auf den Bus 40 gesendet wird oder vom Bus empfangen wird, woraus das RX-Signal erzeugt wird. Der CAN NG-Rahmen 460 ist für die CAN-Kommunikation auf dem Bus 40 in unterschiedliche Felder unterteilt, nämlich ein Startfeld 461, ein Arbitrationsfeld 462, ein Steuerfeld 463, ein Datenfeld 464, ein Prüfsummenfeld 465 und ein Endefeld 466. Ein Rahmen für die erste Nachricht 45 ist bis auf die nachfolgend beschriebenen Unterschiede des Steuerfelds 463 wie der Rahmen 460 aufgebaut. Eine Datenphase 468 beginnt nach einem bestimmten Bit des Steuerfelds 463, mit welchem von der Arbitrationsphase auf die Datenphase 468 umgeschaltet wird. Somit umfasst die Datenphase 468 einen Teil des Steuerfelds 463 und das Datenfeld 464 sowie das Prüfsummenfeld 465. Alle anderen Felder des Rahmens 460 sind Teil der Arbitrationsphase 467

Das Startfeld 461 hat beispielsweise ein Bit, das auch SOF-Bit genannt wird und den Beginn des Rahmens bzw. Start of Frame anzeigt. In dem Arbitrationsfeld 462 ist ein Identifizierer mit beispielsweise 32 Bit zur Identifikation des Senders der Nachricht enthalten. Das Arbitrationsfeld 462 kann zusätzlich eine aus einem oder mehreren Bits bestehende Protokollformatinformation enthalten, welche geeignet ist, CAN NG-Rahmen gegenüber CAN-Rahmen oder CAN FD-Rahmen zu unterscheiden. Die nachfolgende Beschreibung geht jedoch davon aus, dass der CAN NG Rahmen (zweite Nachricht 46) bis zum FDF-Bit identisch zu dem Rahmenformat bei CAN FD (erste Nachricht 45) ist.

Das Steuerfeld 463 hat eine aus einem oder mehreren Bits bestehende Protokollformatinformation, welche zuvor genannt ist und welche geeignet ist, CAN NG-Rahmen gegenüber Classical CAN-Rahmen oder CAN FD-Rahmen zu unterscheiden. In dem Steuerfeld 463 ist ein beispielsweise 12 Bit langer Datenlängecode (Data-Length-Code) enthalten, der zum Beispiel Werte von 1 bis zu 4096 mit der Schrittweite von 1 annehmen kann, oder alternativ Werte von 0 bis 4095 annehmen kann. Der Datenlängecode kann alternativ weniger oder mehr Bits umfassen und der Wertebereich und die Schrittweite können andere Werte annehmen.

In dem Datenfeld 464 sind die Nutzdaten des CAN-NG-Rahmens bzw. der Nachricht 46 enthalten. Die Nutzdaten können entsprechend dem Wertebereich des Datenlängecodes beispielsweise bis zu 64 Bytes oder 4096 Bytes oder eine beliebige andere Anzahl von Bytes aufweisen.

In dem Prüfsummenfeld 465 ist eine Prüfsumme über die Daten in dem Datenfeld 464 einschließlich der Stuffbits enthalten, die vom Sender der Nachricht 46 nach z.B. jeweils 5 oder 10 gleichen Bits als inverses Bit eingefügt werden.

In dem Endefeld 466 kann mindestens ein Acknowledge-Bit und ein Negativ Acknowledge-Bit enthalten sein und außerdem eine Folge von 11 gleichen Bits, welche das Ende E des CAN NG Rahmens 460 anzeigen. Mit dem mindestens einen Acknowledge-Bit kann der sendenden Teilnehmerstation mitgeteilt werden, dass ein Empfänger den empfangenen CAN NG Rahmen 460 bzw. die Nachricht 46 korrekt empfangen hat, mit dem Negative Acknowledge-Bit kann der sendenden Teilnehmerstation mitgeteilt werden, ob ein Empfänger in dem empfangenen CAN NG Rahmen 460 bzw. der Nachricht 46 einen Fehler, der auch als Empfangsfehler bezeichnet werden kann, entdeckt hat oder nicht.

In der Arbitrationsphase 467 wird ein Physical Layer wie bei Classical CAN und CAN FD verwendet. Ein wichtiger Punkt während dieser Phase ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden und die Kommunikationsbandbreite wird sehr effizient genutzt, was sehr vorteilhaft ist.

Das CSMA/CR-Verfahren hat zur Folge, dass es sogenannte rezessive Zustände 402 auf dem Bus 40 geben muss, welche von anderen Teilnehmerstationen 10, 20, 30 mit dominanten Zuständen 401 auf dem Bus 40 überschrieben werden können. Im rezessiven Zustand 402 herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2Megabit pro Sekunde im realen Fahrzeug-Einsatz.

Das Steuerfeld 463 und das Datenfeld 464 werden von einem Sender der Nachricht 46 erst auf den Bus 40 gesendet, wenn die Teilnehmerstation 20 oder die Teilnehmerstation 30 als der Sender die Arbitration gewonnen hat und die Teilnehmerstation 20 als Sender damit zum Senden der Felder 463 bis 466 einen exklusiven Zugriff auf den Bus 40 des Bussystems 1 hat. Bei der Arbitration wird mit Hilfe des Identifizierers in dem Arbitrationsfeld 462 bitweise zwischen den Teilnehmerstationen 10, 20, 30 ausgehandelt, welche Teilnehmerstation 10, 20, 30 die Nachricht 45, 46 mit der höchsten Priorität senden darf und daher für die nächste Zeit zum Senden der Felder 463 bis 465 den exklusiven Zugriff auf den Bus 40 des Bussystems 1 bekommt.

Die Arbitration am Anfang eines Rahmens 460 bzw. der Nachricht 45, 46 und das Acknowledgement in dem Endefeld 466 am Ende E des Rahmens 460 bzw. der Nachricht 45, 46 ist nur dann möglich, wenn die Bitzeit deutlich mehr als doppelt so lang ist wie die Signal-Laufzeit zwischen zwei beliebigen Teilnehmerstationen 10, 20, 30 des Bussystems 1. Daher wird die Bitrate in der Arbitrationsphase 467 bei Übertragung der Felder 461, 462, 463 teilweise und 466 langsamer und damit niedriger gewählt als in den übrigen Feldern des Rahmens 460. Insbesondere wird in der Praxis die Bitrate in der Arbitrationsphase als 500 kbit/s gewählt, woraus eine Bitzeit von ca. 2µs folgt, wohingegen die Bitrate in der Datenphase 468 als beispielsweise 5 bis 8 Mbit/s oder größer gewählt wird, woraus eine Bitzeit von ca. 0,2µs und kürzer folgt. Somit ist die Bitzeit des Signals in der Arbitrationsphase 467 um beispielsweise den Faktor 4 oder 10, usw. größer als die Bitzeit des Signals in Datenphase 468. Der Faktor für die Bitzeit ist beliebig wählbar.

Jede der Teilnehmerstationen 10, 20, 30 kann CAN FD Rahmen senden und empfangen, die Teilnehmerstation 10 kann jedoch keine CAN NG Rahmen 460 senden oder empfangen. Sendet beispielsweise die Teilnehmerstation 20 einen CAN NG Rahmen 460, den die CAN FD Teilnehmerstation 10 nicht verstehen kann, so wird bei der CAN FD Teilnehmerstation 10 die Fehlerrahmenabschirmeinheit 230 aktiv, so dass die Kommunikation im Bussystem1 nicht gestört wird. Dies umfasst auch, dass die Fehlerrahmenabschirmeinheit 230 bei einem lokalen Bitfehler im res-Bit einen Fehlerrahmen 47 abschirmen kann, der gesendet würde, weil eine der Teilnehmerstationen 10, 20, 30 (NG, FD) fälschlicherweise annimmt, dass es sich um einen CAN FD Rahmen (Nachricht 45) handelt und daher nach ein paar Bits einen Fehler, beispielsweise einen Stuffing-Fehler, in dem empfangenen und fälschlicherweise als CAN FD Rahmen 450 angesehenen Rahmen feststellt. Demzufolge ermöglicht das von der Teilnehmerstation 10, 20, 30 durchgeführte Verfahren, dass in dem Bussystem auch mindestens eine CAN FD Teilnehmerstation vorhanden ist, die Nachrichten nach dem CAN FD Protokoll sendet und CAN NG Rahmen 460 versteht.

Bei dem neuen, alternativen Rahmenformat (Frame Format), nämlich der Rahmen 460 der CAN NG Nachricht 46, wird mittels res-Bits im Steuerfeld 463 vom CAN FD Rahmenformat (Frame Format) zum CAN NG Rahmenformat umgeschaltet. Hierbei sind die Rahmenformate von CAN FD und CAN NG bis zum res-Bit gleich. Somit unterstützen die Teilnehmerstationen 20, 30 jeweils auch CAN FD. Anschließend kann zu einem anderen Physical Layer umgeschaltet werden, der eine höhere Bitrate als in der vorangehenden Arbitrationsphase 467 ermöglicht. Somit wird mit einem ersten Physical Layer der erste Buszustand 401 für einen ersten digitalen Datenzustand der Nachrichten 46 erzeugt und ein zweiter Buszustand 402 für den zweiten digitalen Datenzustand der Nachrichten 46 derart erzeugt, dass der erste Buszustand 401 den zweiten Buszustand 402 überschreiben kann bzw. der dominante Buszustand den rezessiven Buszustand überschreiben kann. Gemäß einer Variante können mit dem zweiten Physical Layer unterschiedliche Buszustände 401, 402 derart erzeugt werden, dass die Buszustände 401, 402 für die unterschiedlichen digitalen Datenzustände der Nachrichten 46 einander nicht überschreiben können. Somit gibt es beim zweiten Physical Layer keine dominanten und rezessiven Buszustände.

Im CAN FD Protokoll ist das res-Bit bereits für neue Formate reserviert. Hierbei identifiziert res=0 das CAN FD Frame Format. Dagegen identifiziert res=1 das neue, alternative Rahmenformat 460, das von CAN NG verwendet wird. Erkennt eine Teilnehmerstation 10 ein res=1, so geht es die den Protokoll Ausnahmezustand (Protocol Exception State), der einem passiven Wartezustand entspricht. Dieser Wartezustand wird erst verlassen, wenn eine solche Teilnehmerstation 10 aufeinanderfolgende 11 rezessive Bits detektiert.

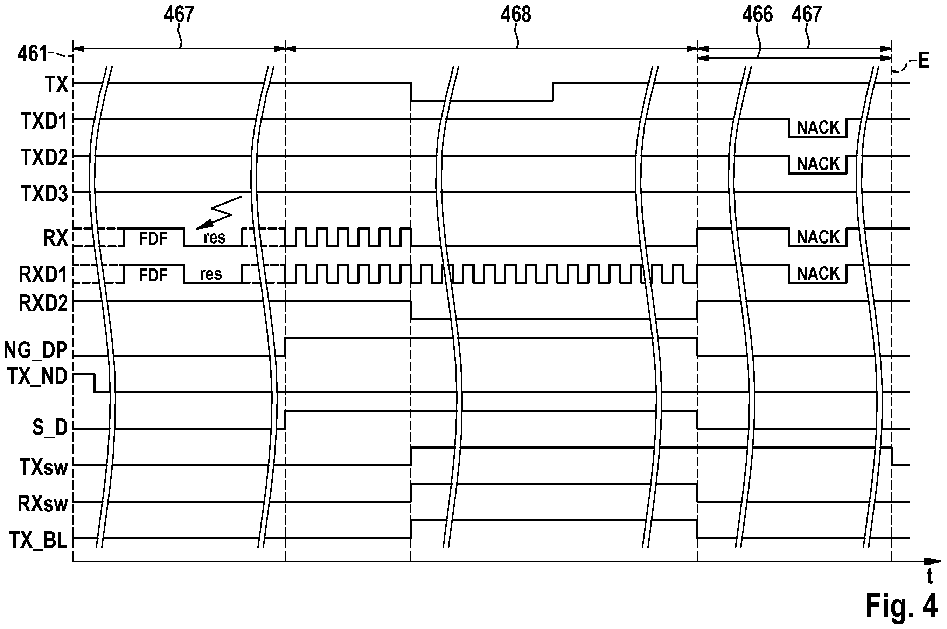

Bei einem Fehler des Sendesignals TX bzw. TX-Signals im res-Bit sendet die das TX-Signal sendende Teilnehmerstation 20, 30 bzw. die TX Teilnehmerstation einen Fehlerrahmen 47 (Error Flag), wie in Fig. 1 gezeigt, und schaltet nicht auf das alternative Format gemäß dem Rahmen 460 um. Die Behandlung einer möglichen Fehlerreaktion aufgrund eines Fehlers des Empfangssignals RX bzw. RX-Signals in einer empfangenden Teilnehmerstation 10, 20, 30 bzw. RX Teilnehmerstation erfolgt mit den Fehlerrahmenabschirmeinheiten 130, 230, 330. Dies wird nachfolgend anhand von Fig. 3 und Fig. 4 beschrieben.

Die Fehlerrahmenabschirmeinheiten 130, 230, 330 ermöglichen also, dass die Teilnehmerstationen 10, 20, 30 in dem Bussystem 1 koexistieren können, da eine Teilnehmerstation 10, 20, 30, welche die Umschaltung zu dem Format des CAN NG Rahmens 460 nicht erfasst hat, die Datenphase 468 eines gesendeten CAN NG Rahmen 460 nicht stören kann. Insbesondere kann ein Fehlerrahmen 47 während der Daten-Phase des CAN NG Rahmens keinen "Kurzschluss" auslösen, wenn die Sende-/Empfangseinrichtung des Senders des CAN NG Rahmens 460, die Teil des TX Knotens bzw. der TX Teilnehmerstation ist, und die Sende-/Empfangseinrichtung, welche den Fehlerrahmen 47 sendet und Teil des RX Knotens bzw. einer RX Teilnehmerstation ist, gegeneinander treiben.

Ganz allgemein können in dem Bussystem 1 mit CAN NG im Vergleich zu CAN FD die folgenden abweichenden Eigenschaften realisiert werden:
a) Übernahme und ggf. Anpassung bewährter Eigenschaften, die für die Robustheit und Anwenderfreundlichkeit von CAN FD verantwortlich sind, insbesondere Rahmenstruktur mit Identifier und Arbitrierung nach dem CSMA/CR-Verfahren,
b) Beträchtliche Steigerung der Netto-Datenübertragungsrate,
c) CAN NG verwendet in der Datenphase 468, ein anderes Physical Layer als CAN FD, z.B. ein Physical Layer, bei dem beide Bus-Zustände aktiv getrieben werden und Fehlerrahmen (Error Flags) während der Datenphase 468 nicht vorgesehen sind. Mit so einem Physical Layer für CAN NG lassen sich deutlich höhere Bitraten erreichen als bei CAN FD.

Fig. 3 zeigt als Beispiel den Aufbau der Fehlerrahmenabschirmeinheit 230 in der Sende-/ Empfangseinrichtung 22. Die Fehlerrahmenabschirmeinheiten 130, 330 sind auf dieselbe Weise ausgeführt, so dass die nachfolgende Beschreibung auch für die Fehlerrahmenabschirmeinheiten 130, 330 gültig ist.

Die Sende-/ Empfangseinrichtung 22 hat die Sende-/ Empfangseinheit 220, die zum Bereitstellen des passenden Physical Layers für die verschiedenen Phasen von CAN FD Nachrichten 45 und von CAN NG Nachrichten 46, für den Bus 40 ausgestaltet ist. Zudem ist die Sende- / Empfangseinheit 220 zum Empfangen von CAN FD Nachrichten 45 und zum Empfangen von CAN NG Nachrichten 46 von dem Bus 40 ausgestaltet. Die Sende- / Empfangseinheit 220 kann jeweils zwischen dem Senden und/oder Empfangen von CAN FD Nachrichten 45 und dem Senden und/oder Empfangen von CAN NG Nachrichten 46 umschalten. Die Sende- / Empfangseinheit 220 ist an die Busadern 41, 42 zum Empfang der Signale CAN_H und CAN_L angeschlossen und mit der Fehlerrahmenabschirmeinheit 230 verschaltet.

An der Fehlerrahmenabschirmeinheit 230 wird das digitale TX-Signal, das auch als Sendesignal TXD bezeichnet wird, von der Kommunikationssteuereinrichtung 21 empfangen und an die Sende-/ Empfangseinheit 220 als digitales TXD1-Signal ausgegeben. Unter Berücksichtigung eines Eingangs-Signal S_D codiert die Sende- / Empfangseinheit 220 das TXD1-Signal auf dem jeweils verwendeten Physical Layer für die unterschiedlichen Kommunikationsphasen, nämlich Arbitrationsphase 467 oder Datenphase 468, der Nachrichten 45, 46. Gleichzeitig decodiert die Sende- / Empfangseinheit 220 den Zustand auf dem Bus 40, also die Signale CAN_H, CAN_L auf den Busadern 41, 42, und gibt das Ergebnis als digitales RXD1-Signal an die Fehlerrahmenabschirmeinheit 230 weiter. Wie nachfolgend beschrieben, erzeugt die Fehlerrahmenabschirmeinheit 230 aus dem RXD1-Signal das digitale RX-Signal, das auch als Empfangssignal RXD bezeichnet wird.

Alternativ oder zusätzlich ist es möglich, dass die Sende- / Empfangseinheit 220 das TXD1-Signal auf dem jeweils verwendeten Physical Layer für die unterschiedlichen Kommunikationsphasen 467, 468 unter Berücksichtigung eines TX_Enable Signals von der Kommunikationssteuereinrichtung 21 codiert.

Ist der CAN NG Physical Layer derart geartet, dass in der Datenphase 468 des CAN NG Rahmens 460 beide Buszustände 401, 402 getrieben werden, dann entnimmt die Sende- / Empfangseinheit 220 daraus, dass der Bus 40, während das Signal S_D gesetzt ist (S_D='1'), nicht getrieben werden darf und beispielsweise hochohmig sein muss.

Die Fehlerrahmenabschirmeinheit 230 hat einen Datenphase-Erfassungsblock 231, einen Sender-Erfassungsblock 232, einen Abschirmentscheidungsblock 233, einen Empfangssignal-Entscheidungsblock 234, einen ersten Sendesignal-Auswahlblock 235, einen Sendesignal- Erzeugungsblock 236, und einen zweiten Sendesignal-Auswahlblock 237 und einen Empfangssignal-Auswahlblock 238. Da der Sendesignal-Erzeugungsblock 236 optional ist, ist dieser und die ihn in der Fehlerrahmenabschirmeinheit 230 anbindenden Leitungen gestrichelt dargestellt.

Der Datenphase-Erfassungsblock 231 erfasst oder detektiert die Datenphase 468 des CAN NG Rahmens 460. Ob sich eine Rahmenübertragung in der Datenphase 468 eines CAN NG Rahmens 460 befindet, signalisiert der Datenphase-Erfassungsblock 231 mit Hilfe des digitalen Signals NG_DP. Hierbei gilt beispielsweise NG_DP:=1, wenn sich eine Übertragung eines CAN NG Rahmens derzeit in der Datenphase 468 befindet, sonst NG_DP:=0.

Der Datenphase-Erfassungsblock 231 verwendet hierzu die Signale CAN_H und CAN_L, um zu entscheiden, ob derzeit die Datenphase 468 stattfindet. Da CAN NG einen anderen Physical Layer für die Datenphase 468 als für die Arbitrationsphase 467 verwendet, werden in der Datenphase 468 eines CAN NG Rahmens 460 andere Differenzspannungen zwischen CAN_H und CAN_L auftreten als bei der Datenphase 468 einer CAN FD Nachricht 45. Der Datenphase-Erfassungsblock 231 erkennt also anhand des verwendeten Physical Layers, ob sich die Übertragung eines CAN NG Rahmens 460 in der Datenphase 468 befindet.

Zusätzlich verwendet der Datenphase-Erfassungsblock 231 das Signal RXD1. Hierfür hat der Datenphase-Erfassungsblock 231 eine sehr vereinfachte CAN NG Kommunikationssteuereinrichtung 2311. Die CAN NG Kommunikationssteuereinrichtung 2311 beobachtet das Signal RXD1 von der Sende- / Empfangseinheit 220 und kann damit exakt vorhersagen, wann die Datenphase 468 beginnt und wann die Datenphase 468 aufhört. Das Ende der Datenphase 468 hängt von der Zahl der übertragenen Bytes ab. Die Zahl der Nutzdatenbytes in dem Datenfeld 464 ist am Anfang der Datenphase 468 in dem Datenlängefeld codiert. Durch Zählen von Bits kann der Datenphase-Erfassungsblock 231 also das Ende der Datenphase 468 bestimmen.

Durch Kombination der beiden Erfassungsergebnisse aus dem Signal RXD1 und den Bussignalen CAN_H, CAN_L ist es möglich, dass der Datenphase-Erfassungsblock 231 immer eine Mehrheitsentscheidung bzw. UND-Entscheidung trifft, das heißt, erst wenn beide Erfassungsergebnisse ergeben, dass derzeit die Datenphase 468 vorliegt, setzt der Datenphase-Erfassungsblock 231 das Signal NG_DB = 1.

Am konservativsten und damit am sichersten ist jedoch die alternative Möglichkeit, dass sobald eines der Erfassungsergebnisse aus dem Signal RXD1 und den Bussignalen CAN_H, CAN_L sagt, dass die Datenphase 468 vorliegt, der Datenphase-Erfassungsblock 231 dies als wahr annimmt.

Die Kombination der beiden Erfassungsergebnisse aus dem Signal RXD1 und den Bussignalen CAN_H, CAN_L ist als Variante zur Erfassung der Datenphase 468 sehr robust gegenüber Störungen am Bus 40. Eine derartige Störung könnte sein, dass ein Bit-Fehler im RXD1 Datenstrom aufgrund von Einstrahlung die Kommunikationssteuereinrichtung 2311 in dem Datenphase-Erfassungsblock 231 glauben lässt, dass der Rahmen 460 kürzer ist als in Wirklichkeit, oder das eine CAN FD Nachricht 45 übertragen wird.

Optional wird das Signal NG_DP an die Kommunikationssteuereinrichtung 21 weitergeleitet, wie mit einer gestrichelten Linie in Fig. 3 dargestellt. Mit Hilfe des Signals NG_DP kann beispielsweise die Kommunikationssteuereinrichtung 21 oder die Software der Teilnehmerstation 20 verstehen, warum beispielsweise der Bus 40 so lange blockiert ist, nämlich weil derzeit ein CAN NG Rahmen 460 den Bus 40 belegt.

Der Sender-Erfassungsblock 232 erfasst oder detektiert, ob die Teilnehmerstation 20 derzeit der Sender der Nachricht 45, 46 ist oder nicht. Als Ergebnis signalisiert der Sender-Erfassungsblock 232 mit Hilfe eines Signals TX_ND, ob die Teilnehmerstation 20 derzeit sendet oder nicht. Beispielsweise gilt TX_ND:=1, wenn die Teilnehmerstation 20 derzeit sendet. Ansonsten gilt TX_ND:=0.

Hierbei beobachtet der Sender-Erfassungsblock 232 das Signal TX, welches die Kommunikationssteuereinheit 21 bereitstellt, und zählt beispielsweise die Anzahl der Flankenwechsel des Signals TX in einer vorbestimmten Zeitdauer T. Sind in der vorbestimmten Zeitdauer T mehr als 0 Flankenwechsel aufgetreten, entscheidet der Sender-Erfassungsblock 232, dass die Teilnehmerstation 20, also die eigene Teilnehmerstation, derzeit sendet. Um diese Information zu plausibilisieren, kann der Sender-Erfassungsblock 232 optional die Anzahl der Flankenwechsel am Signal RXD1 in der vorbestimmten Zeitdauer T zählen. Ist die Zahl der Flankenwechsel in den Signalen TX, RXD1 ähnlich und hat mindestens einen Wert > 0, entscheidet der Sender-Erfassungsblock 232, dass die Teilnehmerstation 20 derzeit sendet.

Alternativ kann der Sender-Erfassungsblock 232 als Zähler ausgestaltet sein, um die Erfassung bzw. Detektion durchzuführen. Insbesondere kann ein Zähler verwendet werden, welcher durch eine Flanke am Sendesignal TX inkrementiert wird und durch eine Flanke an dem Empfangssignal RX dekrementiert wird. Ist der Wert des Zählers negativ, entscheidet der Sender-Erfassungsblock 232, dass die Teilnehmerstation 20 derzeit nicht sendet. Andernfalls entscheidet der Sender-Erfassungsblock 232, dass die Teilnehmerstation 20 derzeit sendet. Zwischen zwei Nachrichten 45, 46 setzt der Sender-Erfassungsblock 232 den Zähler zurück.

Der Abschirmentscheidungsblock 233 entscheidet, ob das TX Signal der Teilnehmerstation 20, also der eigenen Teilnehmerstation, blockiert werden soll oder nicht, also nicht auf den Bus 40 gesendet wird. Der Abschirmentscheidungsblock 233 generiert ein Signal S_D, welches signalisiert, ob eine Blockierung oder Abschirmung eines Fehlerrahmens 47 erfolgen soll, in einem Fall, bei dem die eigene Teilnehmerstation einen Fehlerrahmen 47 sendet. Der Abschirmentscheidungsblock 233 verarbeitet hierfür die Eingangssignale TX_ND und NG_DP. Beispielsweise bedeutet S_D:='1', dass ein Fehlerrahmen 47 zu blockieren ist. Andernfalls gilt, dass ein Fehlerrahmen 47 nicht zu blockieren ist. Ist das Signal NG_DP gesetzt, also findet derzeit die Datenphase 468 eines CAN NG Rahmens 460 statt und ist das Signal TX_ND nicht gesetzt, also die eigene Teilnehmerstation ist derzeit nicht der Sender, dann setzt der Abschirmentscheidungsblock 233 das Signal S_D so, dass das Sendesignal TX blockiert wird.

Ist das Signal S_D gesetzt, also soll das Sendesignal TX blockiert werden, wird der erste Sendesignal-Auswahlblock 235 derart geschaltet, dass das Sendesignal TX nicht weitergereicht wird. Anstelle des Sendesignals TX wird eine neutrale ,1' weitergereicht, die in den Auswahlblock 235 eingegeben wird. Der erste Sendesignal-Auswahlblock 235 kann als Multiplexer ausgestaltet sein. Damit die Teilnehmerstation 20, wenn diese nur Empfänger der Nachricht 46 vom Bus 40 ist, also nicht als Sender der Nachricht 46 agiert, den Bus 40 während des Sendens der Datenphase 468 eines CAN NG Rahmens 46 in Ruhe lässt, wird das Signal S_D auch an die Sende-/ Empfangseinheit 220 weitergereicht.

Der Empfangssignal-Entscheidungsblock 234 entscheidet, welches Empfangssignal RX die Teilnehmerstation 20, also die eigene Teilnehmerstation, über das Signal RXD1 erhält. Ist das Signal S_D gesetzt, wird also die Datenphase 468 eines CAN NG Rahmens 460 gesendet, und ist das Signal TX_ND nicht gesetzt, ist also die eigene Teilnehmerstation derzeit nicht der Sender, und nimmt das Signal TX währenddessen den Wert '0' an, das heißt es wird ein Fehlerrahmen 47 gesendet, dann wird der Empfangssignal-Auswahlblock 238 mit Hilfe eines Signals RXsw so umgeschaltet, dass das Signal RXD2 vom Empfangssignal-Entscheidungsblock 234 an die Teilnehmerstation 20, also die eigene Teilnehmerstation, durchgereicht wird.

Gilt für das Signal S_D = '1' und hat das Sendesignal TX den Wert '0' angenommen, wird das Signal RXD2 auf '0' gesetzt und wird das Signal RXsw so gesetzt, dass der Empfangssignal-Auswahlblock 238 das Signal RXD2 als das Signal RX an die Kommunikationssteuereinrichtung 21 weiterleitet.

Nimmt das Sendesignal TX wieder den Wert '1' an, hat das keine Auswirkung auf die Signale RXsw und RXD2. Erst wenn das Signal S_D den Wert ,0' annimmt, also nicht gesetzt ist, wird das Signal RXD2 auf ,1' zurückgesetzt und wird das Signal RXsw zurückgesetzt, so dass der Empfangssignal-Auswahlblock 238 wieder das Signal RXD1 als das Signal RX durchschaltet.

Optional kann der Empfangssignal-Entscheidungsblock 234 zusätzlich der eigenen CAN NG Kommunikationssteuereinrichtung 21 signalisieren, dass ihr Fehlerrahmen 47 geblockt wurde. Dies kann über ein zusätzliches Signal erfolgen, wie beispielsweise über ein 1-Bit breites Signal TX_BL. Alternativ kann die Signalisierung, dass sein Fehlerrahmen 47 geblockt wurde, über eine serielle Peripherieschnittstelle (SPI-Schnittstelle) kommuniziert werden. Das Signal TX_BL kann beispielsweise aus dem Signal RXD2 folgendermaßen ermittelt werden: TX_BL := not(RXD2). Die Teilnehmerstation 20 ist bei einer negativen Rückmeldung, also dass ein Fehlerrahmen 47 blockiert wurde, informiert, dass die Teilnehmerstation 20, genauer gesagt die Kommunikationssteuereinrichtung 21, während der Datenphase 468 eines CAN NG Rahmens 460 etwas gesendet hat.

In allen anderen Fällen wird das Signal RXD1 von der Sende- / Empfangseinheit 220 über den Empfangssignal-Auswahlblock 238 an die Kommunikationssteuereinrichtung 21 der Teilnehmerstation 20 durchgereicht. Diese anderen Fälle sind zum einen, wenn das Signal S_D ='0' ist, also nicht-gesetzt ist, und das Signal TX einen beliebigen Wert hat, und zum anderen, wenn das Signal S_D ='1' ist, also gesetzt ist, und das Signal TX ='1' ist.

Optional sind der Sendesignal-Erzeugungsblock 236 und der Sendesignal-Auswahlblock 237 vorhanden. Der Sendesignal-Auswahlblock 237 kann als Multiplexer ausgeführt sein.

Der Sendesignal-Erzeugungsblock 236 ist ausgestaltet, auf dem Bus 40 zu signalisieren, ob die Teilnehmerstation 20 einen Empfangsfehler hatte. Ob ein Empfangsfehler vorliegt oder nicht, entscheidet der Sendesignal-Erzeugungsblock 236 unter Verwendung der Signale S_D und TX_BL als Eingangssignale. Ist das Signal TX_BL gesetzt, während auch das Signal S_D gesetzt ist, entscheidet der Sendesignal-Erzeugungsblock 236, dass eine entsprechende Information über den Empfangsfehler auf den Bus 40 gesendet werden soll. Der Sendesignal-Erzeugungsblock 236 speichert diese Information insbesondere in einem Register.

Für die Signalisierung der entsprechenden Information über den Empfangsfehler generiert der Sendesignal-Erzeugungsblock 236 ein Signal TXD2, welches an die Sende- / Empfangseinheit 220 weitergeleitet werden kann. So kann das Signal TXD2 einen fehlerhaften Empfang im Endefeld 466 des CAN NG Rahmens 460 signalisieren. Für den Fall, dass das CAN NG Rahmenformat nach der Übertragung der Datenphase 468 des CAN NG Rahmens 460 im Endefeld 466 positive und negative Acknowledges verwendet, wird der Sendesignal- Erzeugungsblock 236 ein negatives Acknowledge senden. Die Position des negativen Acknowledge-Bits kann im Sendesignal-Erzeugungsblock 236 beispielsweise hart als eine Zahl codiert werden, die der "Anzahl von Bits ab dem Ende der Datenphase 468" entspricht.

Wechselt das Signal S_D auf "nicht gesetzt", dann schließt der Sendesignal-Erzeugungsblock 236 daraus, dass die Datenphase 468 des CAN NG Rahmens 460 zu Ende ist.

Alternativ kann der Sendesignal-Erzeugungsblock 236 nach der Datenphase 468 beispielsweise einen Fehlerrahmen 47 senden.

Um etwas senden zu können, schaltet der Sendesignal-Erzeugungsblock 236 den zweiten Sendesignal-Auswahlblock 237 derart, dass sein Signal TXD2 zu der Sende- / Empfangseinheit 220 durchgeschaltet wird.

Der Sendesignal-Erzeugungsblock 236 behält so lange die Kontrolle über das TX Signal, mittels des Signals TXD2, bis der CAN NG Rahmen 460 zu Ende ist.

Anschließend geht der Sendesignal-Erzeugungsblock 236 wieder in einen Ausgangszustand, bei welchem der Sendesignal-Erzeugungsblock 236 den zweiten Sendesignal-Auswahlblock 237 derart schaltet, dass das Signal TXD3 an die Sende- / Empfangseinheit 220 durchgereicht wird.

Fig. 4 zeigt ein Beispiel der zuvor genannten Signale über der Zeit t für den Fall, dass die Teilnehmerstation 20 nur Empfänger einer Nachricht 45, 46 ist, also eine RX-Teilnehmerstation ist, und fälschlicherweise aufgrund des mit dem gezackten schwarzen Blockpfeil dargestellten Fehlers eine CAN FD Nachricht 45 erwartet, obwohl eine CAN NG Nachricht 46 gesendet wird. Ein beliebiger Wert eines Signals ist mit gestrichelten Linien dargestellt. Die Laufzeiten der Signale sind in Fig. 4 als 0 angenommen, damit das Signal-Zeit Diagramm von Fig. 4 einfacher zu verstehen ist.

In Fig. 4 ist an dem Signal TXD1 erkennbar, dass der Fehlerrahmen 47 geblockt wurde, der mittels des Sendesignals TX gesendet werden sollte. Außerdem ist an dem Signal TXD1 erkennbar, dass ein negatives Acknowledge (NACK) verschickt wurde, um den anderen CAN NG Teilnehmerstation(en) 20, 30 zu signalisieren, dass die Teilnehmerstation 20 die Nachricht 46 nicht erhalten hat. Die anderen CAN NG Teilnehmerstation(en) 20, 30 können jedoch nur erkennen, dass eine der Teilnehmerstationen 10, 20, 30 des Bussystems 1 die Nachricht 46 nicht erhalten hat.

Gemäß einem zweiten Ausführungsbeispiel führt der Datenphase-Erfassungsblock 231 seine Erfassung nur mit den Bussignalen CAN_H, CAN_L aus. Ansonsten ist die Funktion der Fehlerrahmenabschirmeinheit 230 wie bei dem vorangehenden Ausführungsbeispiel ausgeführt.

Die Variante des Datenphase-Erfassungsblocks 231 gemäß dem vorliegenden Ausführungsbeispiel ist somit weniger aufwändig als die Variante des Datenphase-Erfassungsblocks 231 gemäß dem vorangehenden Ausführungsbeispiel. Jedoch kann bei dem vorliegenden Ausführungsbeispiel eine Störung nicht ausfindig gemacht werden, die nur mit der Erfassung und Auswertung des Signals TXD1 erkannt werden kann.

Gemäß einem dritten Ausführungsbeispiel führt der Datenphase-Erfassungsblock 231 seine Erfassung nur mit dem Signal TXD1 aus. Ansonsten ist die Funktion der Fehlerrahmenabschirmeinheit 230 wie bei dem ersten Ausführungsbeispiel ausgeführt.

Die Variante des Datenphase-Erfassungsblocks 231 gemäß dem vorliegenden Ausführungsbeispiel ist somit weniger aufwändig als die Variante des Datenphase-Erfassungsblocks 231 gemäß dem ersten Ausführungsbeispiel. Jedoch kann bei dem vorliegenden Ausführungsbeispiel eine Störung nicht ausfindig gemacht werden, die nur mit der Erfassung und Auswertung der Bussignale CAN_H, CAN_L erkannt werden kann.

Gemäß einem vierten Ausführungsbeispiel ist der Sender-Erfassungsblock 232 als eine vereinfachte CAN NG Kommunikationssteuereinrichtung ausgeführt, die als Eingangssignal das Signal TX verwendet. Durch die sequentielle Dekodierung des gesendeten CAN NG Rahmens 460 kann die vereinfachte CAN NG Kommunikationssteuereinrichtung sehr leicht und sicher entscheiden, ob die Teilnehmerstation 20, also die eigene Teilnehmerstation, ein Sender ist oder nicht. Bleibt das Signal TX beispielsweise ab einem bestimmten Bit während der Arbitrationsphase 467 auf dem Wert 1, dann entnimmt die vereinfachte CAN NG Kommunikationssteuereinrichtung daraus, dass die Teilnehmerstation 20, also die eigene Teilnehmerstation, die Arbitration verloren hat, also nicht der Sender ist.

Diese Ausgestaltung des Sender-Erfassungsblocks 232 zur Erfassung, ob die Teilnehmerstation 20 der Sender ist, ist robuster bzw. zuverlässiger als die Ausgestaltung des Sender-Erfassungsblocks 232 gemäß dem ersten Ausführungsbeispiel. Jedoch hat die vorliegende Ausgestaltung des Sender-Erfassungsblocks 232 einen höheren Ressourcenbedarf als die Ausgestaltung des Sender-Erfassungsblocks 232 gemäß dem ersten Ausführungsbeispiel.

Gemäß einem fünften Ausführungsbeispiel sind der Empfangssignal-Auswahlblock 238 und der Sendesignal-Erzeugungsblock 236 vorhanden. Hat in diesem Fall der Empfangssignal-Auswahlblock 238 tatsächlich einen Fehlerrahmen 47 blockiert, also das Signal TX_BL war gesetzt, kann der Empfangssignal-Auswahlblock 238 das Signal RX auf den Wert '0' setzen und mittels dem Signal RXD2:='0' und dem Signal RXsw bis zum Beginn der 11 rezessiven Bits am Ende des Endefelds 466 vorgeben, d.h. während den Acknowledge und negative Acknowledge Bits ist das Signal RX auf dem Wert ,0'. Dies unterscheidet sich von dem ersten Ausführungsbeispiel, bei welchem der Empfangssignal-Auswahlblock 238 das zuvor angegebene Signal RX nur bis zum Ende der Datenphase 468 vorgibt.

Den Beginn der 11 rezessiven Bits am Ende des Endefelds 466 kann der Empfangssignal-Auswahlblock 238 beispielsweise durch Abzählen von Bits ab dem Wechsel des Signals S_D von 1 auf 0 erkennen.

Alle zuvor beschriebenen Ausgestaltungen der Kommunikationssteuereinrichtungen 21, 31, der Sende- / Empfangseinrichtungen 22, 32, der Fehlerrahmenabschirmeinheiten 130, 230, 330, der Teilnehmerstationen 10, 20, 30, des Bussystems 1 und der darin ausgeführten Verfahren können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch auch eine andere Art von Kommunikationsnetz sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 10 in dem Bussystem 1 entfallen. In diesem Fall sind die Fehlerrahmenabschirmeinheiten 230, 330 erforderlich, wenn die Teilnehmerstationen 20, 30 auch in dem CAN FD Format senden können, damit die Übertragung der Datenphase 468 des CAN NG Rahmens 460 nicht gestört wird, wenn eine der Teilnehmerstationen 20, 30 nicht erfolgreich zu dem Format der Datenphase 468 des CAN NG Rahmens 460 umgeschaltet hat. Es ist möglich, dass eine oder mehrere der Teilnehmerstationen 20 oder 30 in dem Bussystem 1 vorhanden sind.

Möglicherweise ist mindestens eine der Fehlerrahmenabschirmeinheiten 130, 230, 330 extern von der Sende-/ Empfangseinrichtung 22, 32 angeordnet. Insbesondere ist mindestens eine der Fehlerrahmenabschirmeinheit 130, 230, 330 als separate Einheit der Teilnehmerstation 10, 20, 30 vorgesehen.

## Patentansprüche

1. Fehlerrahmenabschirmeinheit (130; 230; 330) für eine Teilnehmerstation (10; 20; 30) eines seriellen Bussystems (1), bei welchem in einer ersten Kommunikationsphase zur Übertragung einer Nachricht (45; 46) auf einen Bus (40) des Bussystems (1) zwischen den Teilnehmerstationen (20, 30) des Bussystems (1) ausgehandelt wird, welche der Teilnehmerstationen (20, 30) in einer nachfolgenden zweiten Kommunikationsphase zumindest zeitweise einen exklusiven, kollisionsfreien Zugriff auf den Bus (40) des Bussystems (1) hat, wobei die zweite Kommunikationsphase eine Datenphase (468) ist, in welcher Nutzdaten der Nachricht (45; 46) auf dem Bus (40) übertragen werden, und wobei die Fehlerrahmenabschirmeinheit (130; 230; 330) aufweist
einen Datenphase-Erfassungsblock (231) zur Erfassung der Datenphase (468) der auf dem Bus (40) seriell übertragenen Nachricht (46), und
einen Sender-Erfassungsblock (232) zur Erfassung, ob die Teilnehmerstation (10; 20; 30) derzeit der Sender der auf dem Bus (40) seriell übertragenen Nachricht (45, 46) ist oder nicht,
einen Abschirmentscheidungsblock (233) zur Erzeugung eines Signals (S_D) als Reaktion auf ein Erfassungsergebnis (NG_DP) des Datenphase-Erfassungsblocks (231) und ein Erfassungsergebnis (TX_ND) des Sender-Erfassungsblocks (232), wobei der Abschirmentscheidungsblock (233) ausgestaltet ist, das Signal (S_D) während einer Übertragung der Datenphase (468) einer Nachricht (46) auf dem Bus (40) des Bussystems (1), für die die Teilnehmerstation (10; 20; 30) derzeit nicht der Sender ist, auf einen ersten vorbestimmten Wert zu setzen, der angibt, dass ein Sendesignal (TX), das von der Teilnehmerstation (10; 20; 30) aufgrund der Erkennung eines Empfangsfehlers in der von dem Bus (40) empfangenen Nachricht (46) während der Datenphase (468) erstellt wurde, während der Datenphase (468) nicht auf den Bus (40) gesendet werden soll und das Signal (S_D) ansonsten auf einen zweiten vorbestimmten Wert zu setzen, und
einen Sendesignal-Auswahlblock (235) zur Blockierung des Sendesignals (TX), das von der Teilnehmerstation (10; 20; 30) aufgrund der Erkennung des Empfangsfehlers in der von dem Bus (40) empfangenen Nachricht (46) während der Datenphase (468) erstellt wurde und mit einem Fehlerrahmen (47) auf dem Bus (40) den Empfangsfehler in der von dem Bus (40) empfangenen Nachricht (46) anzeigen soll, falls das von dem Abschirmentscheidungsblock (233) erzeugte Signal (S_D) auf den ersten vorbestimmten Wert gesetzt ist, so dass der Fehlerrahmen (47) nicht auf den Bus (40) gesendet wird, und zum Nicht-Blockieren des Sendesignals (TX), falls das von dem Abschirmentscheidungsblock (233) erzeugte Signal (S_D) auf den zweiten vorbestimmten Wert gesetzt ist.

2. Fehlerrahmenabschirmeinheit (130; 230; 330) nach Anspruch 1,
wobei der Datenphase-Erfassungsblock (231) ausgestaltet ist, zur Erfassung der Datenphase (468) einen Zustand auf dem Bus (40) zu erfassen.

3. Fehlerrahmenabschirmeinheit (130; 230; 330) nach Anspruch 2,
wobei der Datenphase-Erfassungsblock (231) ausgestaltet ist, zur Erfassung der Datenphase (468) ein digitales Empfangssignal (RXD1) auszuwerten, das aus der vom Bus (40) empfangenen Nachricht (46) erzeugt wird.

4. Fehlerrahmenabschirmeinheit (130; 230; 330) nach einem der vorangehenden Ansprüche, wobei der Sender-Erfassungsblock (232) ausgestaltet ist, ein Sendesignal (TX) auszuwerten, das von der Teilnehmerstation (10; 20; 30) zu dem Bus (40) gesendet wird.

5. Fehlerrahmenabschirmeinheit (130; 230; 330) nach Anspruch 4,
wobei der Sender-Erfassungsblock (232) ausgestaltet ist, zur Auswertung des Sendesignals (TX) Flankenwechsel des Sendesignals (TX) zu zählen.

6. Fehlerrahmenabschirmeinheit (130; 230; 330) nach Anspruch 4 oder 5,
wobei der Sender-Erfassungsblock (232) ausgestaltet ist, zur Auswertung des Sendesignals (TX) eine sequentielle Dekodierung des Sendesignals (TX) auszuführen.

7. Fehlerrahmenabschirmeinheit (130; 230; 330) nach einem der Ansprüche 4 bis 6,
wobei der Sender-Erfassungsblock (232) ausgestaltet ist, zur Auswertung des Sendesignals (TX) das Sendesignal (TX) mit einem digitalen Empfangssignal (RXD1) zu vergleichen, das aus der vom Bus (40) empfangenen Nachricht (46) erzeugt wird.

8. Fehlerrahmenabschirmeinheit (130; 230; 330) nach einem der vorangehenden Ansprüche,
zudem mit einem Empfangssignal-Entscheidungsblock (234) zum Entscheiden, welches Empfangssignal (RX) die Fehlerrahmenabschirmeinheit (130; 230; 330) an die Teilnehmerstation (10; 20; 30) weitergibt,
wobei der Empfangssignal-Entscheidungsblock (234) ausgestaltet ist, die Entscheidung zu treffen in Abhängigkeit von einem Ergebnis, ob die Teilnehmerstation (10; 20; 30) einen Fehlerrahmen (47) sendet, sowie in Abhängigkeit von dem von dem Abschirmentscheidungsblock (233) erzeugten Signal (S_D).

9. Fehlerrahmenabschirmeinheit (130; 230; 330) nach einem der vorangehenden Ansprüche,
zudem mit einem Sendesignal-Erzeugungsblock (236) zum Erzeugen eines Sendesignals (TXD2), in welchem nach einer Datenphase (468) der Nachricht (46) signalisiert ist, dass bei der Teilnehmerstation (10; 20; 30) ein Empfangsfehler erfasst wurde,
wobei der Sendesignal-Erzeugungsblock (236) ausgestaltet ist, das Sendesignal (TXD2) zu erzeugen und zum Bus (40) zu senden, falls das von dem Empfangssignal-Entscheidungsblock (234) erzeugte Signal (TX_BL) angibt, dass der Fehlerrahmen (47) zum Senden auf den Bus (40) blockiert wurde.

10. Teilnehmerstation (10; 20; 30) für ein serielles Bussystem (1), mit
einer Kommunikationssteuereinrichtung (11; 21; 31) zum Senden einer Nachricht (45; 46) zu einem Bus (40) des Bussystems (1) und/oder zum Empfangen einer Nachricht (45; 46) von dem Bus (40) des Bussystems (1), und
einer Sende-/ Empfangseinrichtung (12; 22; 32) zum Senden der Nachricht (45; 46) auf den Bus (40), und
einer Fehlerrahmenabschirmeinheit (130; 230; 330) nach einem der vorangehenden Ansprüche, die mit der Kommunikationssteuereinrichtung (11; 21; 31) und der Sende- Empfangseinrichtung (12; 22; 32) verschaltet ist,
wobei die Sende- / Empfangseinrichtung (22; 32) ausgestaltet ist, beim Senden mit einer ersten Bitrate, einen ersten Buszustand (401) für einen ersten digitalen Datenzustand der Nachrichten (45; 46) zu erzeugen und einen zweiten Buszustand (402) für den zweiten digitalen Datenzustand der Nachrichten (45; 46) derart zu erzeugen, dass der zweite Buszustand (402) den ersten Buszustand (401) überschreiben kann, und
wobei die Sende- / Empfangseinrichtung (22; 32) ausgestaltet ist, beim Senden mit einer zweiten Bitrate, die höher ist als die erste Bitrate, unterschiedliche Buszustände (401, 402) derart zu erzeugen, dass die Buszustände (401, 402) für die unterschiedlichen digitalen Datenzustände der Nachrichten (45; 46) einander nicht überschreiben können, und
wobei die Fehlerrahmenabschirmeinheit (130; 230; 330) ausgestaltet ist zu erfassen, wann die Sende- / Empfangseinrichtung (22; 32) vom Senden mit der ersten Bitrate zum Senden mit der zweiten Bitrate umschaltet und vom Senden mit der zweiten Bitrate zum Senden mit der ersten Bitrate umschaltet.

11. Bussystem (1), mit
einem Bus (40), und
mindestens zwei Teilnehmerstationen (20; 30), welche über den Bus (40) derart miteinander verbunden sind, dass sie seriell miteinander kommunizieren können und von denen mindestens eine Teilnehmerstation (20; 30) eine Teilnehmerstation (20; 30) nach Anspruch 10 ist.

12. Bussystem (1) nach Anspruch 11,
zudem mit mindestens einer zusätzlichen Teilnehmerstation (10), welche zur Übertragung der Nachricht (45) auf dem Bus (40) nur ausgestaltet ist, in einer ersten und zweiten Kommunikationsphase der Nachricht (45) Buszustände (401, 402) derart auf dem Bus (40) zu erzeugen, dass der zweite Buszustand (402) den ersten Buszustand (401) überschreiben kann,
wobei die mindestens eine zusätzliche Teilnehmerstation (10) über den Bus (40) mit den mindestens zwei Teilnehmerstationen (20; 30) derart verbunden ist, dass die Teilnehmerstationen (10, 20, 30) seriell miteinander kommunizieren können,
wobei die mindestens eine zusätzliche Teilnehmerstation (10) eine Fehlerrahmenabschirmeinheit (130; 230; 330) nach einem der Ansprüche 1 bis 9 aufweist,
wobei die Fehlerrahmenabschirmeinheit (130; 230; 330) der mindestens einen Teilnehmerstationen (20; 30) nach Anspruch 9 und der mindestens einen zusätzlichen Teilnehmerstation (10) ausgestaltet ist, einen Fehlerrahmen (47) zu blockieren, wenn das von dem Abschirmentscheidungsblock (233) erzeugte Signal (S_D) anzeigt, dass derzeit in der zweiten Kommunikationsphase eine Nachricht (46) empfangen wird, deren Format eine Kommunikationssteuereinrichtung (11; 21; 31) der Teilnehmerstation (10; 20; 30) aufgrund eines Fehlers nicht verstehen kann, und wenn die Kommunikationssteuereinrichtung (11; 21; 31) der mindestens einen zusätzlichen Teilnehmerstation (10; 20; 30) währenddessen versucht, einen Fehlerrahmen (47) zu senden.

13. Verfahren zur Kommunikation in einem seriellen Bussystem (1), bei welchem in einer ersten Kommunikationsphase zur Übertragung einer Nachricht (45; 46) auf einen Bus (40) des Bussystems (1) zwischen den Teilnehmerstationen (20, 30) des Bussystems (1) ausgehandelt wird, welche der Teilnehmerstationen (20, 30) in einer nachfolgenden zweiten Kommunikationsphase zumindest zeitweise einen exklusiven, kollisionsfreien Zugriff auf den Bus (40) des Bussystems (1) hat, wobei die zweite Kommunikationsphase eine Datenphase (468) ist, in welcher Nutzdaten der Nachricht (45; 46) auf dem Bus (40) übertragen werden, wobei das Verfahren die Schritte aufweist
Senden, mit einer Sende- / Empfangseinrichtung (22; 32), von Nachrichten (45; 46) auf einen Bus (40) des Bussystems (1) und/oder
Empfangen, mit der Sende- / Empfangseinrichtung (22; 32), von Nachrichten (45; 46) von dem Bus (40) des Bussystems (1),
Erfassen, mit einem Datenphase -Erfassungsblock (231) der Datenphase (468) der auf dem Bus (40) seriell übertragenen Nachricht (46),
Erfassen, mit einem Sender-Erfassungsblock (232), ob die Teilnehmerstation (10; 20; 30) derzeit der Sender der auf dem Bus (40) seriell übertragenen Nachricht (45, 46) ist oder nicht,
Erzeugen, mit einem Abschirmentscheidungsblock (233), eines Signals (S_D) als Reaktion auf ein Erfassungsergebnis (NG_DP) des Datenphase-Erfassungsblocks (231) und ein Erfassungsergebnis (TX_ND) des Sender-Erfassungsblocks (232), wobei der Abschirmentscheidungsblock (233) das Signal (S_D) während einer Übertragung der Datenphase (468) einer Nachricht (46) auf dem Bus (40) des Bussystems (1), für die die Teilnehmerstation (10; 20; 30) derzeit nicht der Sender ist, auf einen ersten vorbestimmten Wert setzt, der angibt, dass ein Sendesignal (TX), das von der Teilnehmerstation (10; 20; 30) aufgrund der der Erkennung eines Empfangsfehlers in der von dem Bus (40) empfangenen Nachricht (46) während der Datenphase (468) erstellt wurde, während der Datenphase (468) nicht auf den Bus (40) gesendet werden soll und das Signal (S_D) ansonsten auf einen zweiten vorbestimmten Wert setzt,
Blockieren, mit einem Sendesignal-Auswahlblock (235), des Sendesignals (TX), das von der Teilnehmerstation (10; 20; 30) aufgrund der Erkennung des Empfangsfehlers in der von dem Bus (40) empfangenen Nachricht (46) während der Datenphase (468) erstellt wurde und mit einem Fehlerrahmen (47) auf dem Bus (40) den Empfangsfehler in der von dem Bus (40) empfangenen Nachricht (46) anzeigen soll, falls das von dem Abschirmentscheidungsblock (233) erzeugte Signals (S_D) auf den ersten vorbestimmten Wert gesetzt ist, so dass der Fehlerrahmen (47) nicht auf den Bus (40) gesendet wird, und
Nicht-Blockieren des Sendesignals (TX), falls das von dem Abschirmentscheidungsblock (233) erzeugte Signal (S_D) auf den zweiten vorbestimmten Wert gesetzt ist.

## Claims

1. Error flag screening unit (130; 230; 330) for a subscriber station (10; 20; 30) of a serial bus system (1), in which, in a first communication phase for transmitting a message (45; 46) to a bus (40) of the bus system (1), it is negotiated between the subscriber stations (20, 30) of the bus system (1) which of the subscriber stations (20, 30) at least temporarily has exclusive, collision-free access to the bus (40) of the bus system (1) in a subsequent second communication phase, wherein the second communication phase is a data phase (468) in which useful data of the message (45; 46) are transmitted on the bus (40), and wherein the error flag screening unit (130; 230; 330) has
a data-phase detection block (231) for detecting the data phase (468) of the message (46) serially transmitted on the bus (40), and
a transmitter detection block (232) for detecting whether or not the subscriber station (10; 20; 30) is currently the transmitter of the message (45, 46) serially transmitted on the bus (40),
a screening decision block (233) for generating a signal (S_D) in response to a detection result (NG_DP) of the data-phase detection block (231) and a detection result (TX_ND) of the transmitter detection block (232), wherein the screening decision block (233) is configured to set the signal (S_D), during transmission of the data phase (468) of a message (46) on the bus (40) of the bus system (1) for which message the subscriber station (10; 20; 30) is not currently the transmitter, to a first predetermined value which indicates that a transmission signal (TX), which was created by the subscriber station (10; 20; 30) during the data phase (468) due to the identification of a reception error in the message (46) received from the bus (40), is not to be transmitted to the bus (40) during the data phase (468), and to otherwise set the signal (S_D) to a second predetermined value, and
a transmission-signal selection block (235) for blocking the transmission signal (TX), which was created by the subscriber station (10; 20; 30) during the data phase (468) due to the identification of the reception error in the message (46) received from the bus (40) and is to indicate the reception error in the message (46) received from the bus (40) by using an error flag (47) on the bus (40), if the signal (S_D) generated by the screening decision block (233) is set to the first predetermined value, with the result that the error flag (47) is not transmitted to the bus (40), and for not blocking the transmission signal (TX) if the signal (S_D) generated by the screening decision block (233) is set to the second predetermined value.

2. Error flag screening unit (130; 230; 330) according to Claim 1,
wherein the data-phase detection block (231) is configured to detect a state on the bus (40) in order to detect the data phase (468).

3. Error flag screening unit (130; 230; 330) according to Claim 2,
wherein the data-phase detection block (231) is configured to evaluate a digital reception signal (RXD1) generated from the message (46) received from the bus (40), in order to detect the data phase (468).

4. Error flag screening unit (130; 230; 330) according to one of the preceding claims, wherein the transmitter detection block (232) is configured to evaluate a transmission signal (TX) transmitted from the subscriber station (10; 20; 30) to the bus (40).

5. Error flag screening unit (130; 230; 330) according to Claim 4,
wherein the transmitter detection block (232) is configured to count edge changes of the transmission signal (TX) in order to evaluate the transmission signal (TX).

6. Error flag screening unit (130; 230; 330) according to Claim 4 or 5,
wherein the transmitter detection block (232) is configured to carry out sequential decoding of the transmission signal (TX) in order to evaluate the transmission signal (TX).

7. Error flag screening unit (130; 230; 330) according to one of Claims 4 to 6,
wherein the transmitter detection block (232) is configured to compare the transmission signal (TX) with a digital reception signal (RXD1) generated from the message (46) received from the bus (40), in order to evaluate the transmission signal (TX).

8. Error flag screening unit (130; 230; 330) according to one of the preceding claims,
additionally having a reception-signal decision block (234) for deciding which reception signal (RX) the error flag screening unit (130; 230; 330) forwards to the subscriber station (10; 20; 30),
wherein the reception-signal decision block (234) is configured to make the decision on the basis of a result as to whether the subscriber station (10; 20; 30) transmits an error flag (47), and on the basis of the signal (S_D) generated by the screening decision block (233).

9. Error flag screening unit (130; 230; 330) according to one of the preceding claims,
additionally having a transmission-signal generation block (236) for generating a transmission signal (TXD2), in which, after a data phase (468) of the message (46), it is signalled that a reception error was detected at the subscriber station (10; 20; 30),
wherein the transmission-signal generation block (236) is configured to generate the transmission signal (TXD2) and to transmit it to the bus (40) if the signal (TX_BL) generated by the reception-signal decision block (234) indicates that the error flag (47) was blocked for transmitting to the bus (40).

10. Subscriber station (10; 20; 30) for a serial bus system (1), having
a communication control device (11; 21; 31) for transmitting a message (45; 46) to a bus (40) of the bus system (1) and/or for receiving a message (45; 46) from the bus (40) of the bus system (1), and
a transceiver device (12; 22; 32) for transmitting the message (45; 46) to the bus (40), and
an error flag screening unit (130; 230; 330) according to one of the preceding claims, which is connected to the communication control device (11; 21; 31) and to the transceiver device (12; 22; 32),
wherein the transceiver device (22; 32) is configured, when transmitting at a first bit rate, to generate a first bus state (401) for a first digital data state of the messages (45; 46) and to generate a second bus state (402) for the second digital data state of the messages (45; 46) in such a way that the second bus state (402) can overwrite the first bus state (401), and
wherein the transceiver device (22; 32) is configured, when transmitting at a second bit rate which is higher than the first bit rate, to generate different bus states (401, 402) in such a way that the bus states (401, 402) for the different digital data states of the messages (45; 46) cannot overwrite one another, and
wherein the error flag screening unit (130; 230; 330) is configured to detect when the transceiver device (22; 32) switches from transmitting at the first bit rate to transmitting at the second bit rate and switches from transmitting at the second bit rate to transmitting at the first bit rate.

11. Bus system (1) having
a bus (40), and
at least two subscriber stations (20; 30) which are connected to one another via the bus (40) in such a way that they can communicate serially with one another and at least one subscriber station (20; 30) of which is a subscriber station (20; 30) according to Claim 10.

12. Bus system (1) according to Claim 11,
additionally having at least one additional subscriber station (10) which is configured, in order to transmit the message (45) on the bus (40), only to generate bus states (401, 402) on the bus (40) in a first and second communication phase of the message (45) in such a way that the second bus state (402) can overwrite the first bus state (401),
wherein the at least one additional subscriber station (10) is connected to the at least two subscriber stations (20; 30) via the bus (40) in such a way that the subscriber stations (10, 20, 30) can communicate serially with one another,
wherein the at least one additional subscriber station (10) has an error flag screening unit (130; 230; 330) according to one of Claims 1 to 9,
wherein the error flag screening unit (130; 230; 330) of the at least one subscriber station (20; 30) according to Claim 9 and of the at least one additional subscriber station (10) is configured to block an error flag (47) if the signal (S_D) generated by the screening decision block (233) indicates that a message (46) is currently received in the second communication phase the format of which message cannot be understood by a communication control device (11; 21; 31) of the subscriber station (10; 20; 30) due to an error, and if the communication control device (11; 21; 31) of the at least one additional subscriber station (10; 20; 30) meanwhile attempts to transmit an error flag (47).

13. Method for communication in a serial bus system (1), in which, in a first communication phase for transmitting a message (45; 46) to a bus (40) of the bus system (1), it is negotiated between the subscriber stations (20, 30) of the bus system (1) which of the subscriber stations (20, 30) at least temporarily has exclusive, collision-free access to the bus (40) of the bus system (1) in a subsequent second communication phase, wherein the second communication phase is a data phase (468) in which useful data of the message (45; 46) are transmitted on the bus (40), wherein the method has the steps of
transmitting, using a transceiver device (22; 32), messages (45; 46) to a bus (40) of the bus system (1) and/or
receiving, using the transceiver device (22; 32), messages (45; 46) from the bus (40) of the bus system (1),
detecting, using a data-phase detection block (231), the data phase (468) of the message (46) serially transmitted on the bus (40),
detecting, using a transmitter detection block (232), whether or not the subscriber station (10; 20; 30) is currently the transmitter of the message (45, 46) serially transmitted on the bus (40),
generating, using a screening decision block (233), a signal (S_D) in response to a detection result (NG_DP) of the data-phase detection block (231) and a detection result (TX_ND) of the transmitter detection block (232), wherein the screening decision block (233) sets the signal (S_D), during transmission of the data phase (468) of a message (46) on the bus (40) of the bus system (1) for which message the subscriber station (10; 20; 30) is not currently the transmitter, to a first predetermined value which indicates that a transmission signal (TX), which was created by the subscriber station (10; 20; 30) during the data phase (468) due to the identification of a reception error in the message (46) received from the bus (40), is not to be transmitted to the bus (40) during the data phase (468), and otherwise sets the signal (S_D) to a second predetermined value,
blocking, using a transmission-signal selection block (235), the transmission signal (TX), which was created by the subscriber station (10; 20; 30) during the data phase (468) due to the identification of the reception error in the message (46) received from the bus (40) and is to indicate the reception error in the message (46) received from the bus (40) by using an error flag (47) on the bus (40), if the signal (S_D) generated by the screening decision block (233) is set to the first predetermined value, with the result that the error flag (47) is not transmitted to the bus (40), and
not blocking the transmission signal (TX) if the signal (S_D) generated by the screening decision block (233) is set to the second predetermined value.

## Revendications

1. Unité (130 ; 230 ; 330) de protection contre les trames d'erreur pour une station d'abonné (10 ; 20 ; 30) d'un système de bus série (1), dans laquelle, dans une première phase de communication pour la transmission d'un message (45 ; 46) sur un bus (40) du système de bus (1), il est négocié entre les stations d'abonnés (20, 30) du système de bus (1) laquelle des stations d'abonnés (20, 30) a, dans une deuxième phase de communication suivante, au moins temporairement, un accès exclusif et sans collision au bus (40) du système de bus (1), la deuxième phase de communication étant une phase de données (468) dans laquelle des données utiles du message (45 ; 46) sont transmises sur le bus (40), et l'unité (130 ; 230 ; 330) de protection contre les trames d'erreur présentant
un bloc (231) de détection de phase de données, pour détecter la phase de données (468) du message (46) transmis en série sur le bus (40), et
un bloc (232) de détection d'émetteur, pour détecter si la station d'abonné (10 ; 20 ; 30) est ou non actuellement l'émetteur du message (45, 46) transmis en série sur le bus (40),
un bloc (233) de décision de protection, pour générer un signal (S_D) en réponse à un résultat de détection (NG_DP) du bloc (231) de détection de phase de données et à un résultat de détection (TX_ND) du bloc (232) de détection d'émetteur, le bloc (233) de décision de protection étant configuré pour générer le signal (S_D) pendant une transmission de la phase de données (468) d'un message (46) sur le bus (40) du système de bus (1) pour lequel la station d'abonné (10 ; 20 ; 30) n'est pas actuellement l'émetteur, à une première valeur prédéterminée indiquant qu'un signal d'émission (TX) créé par la station d'abonné (10 ; 20 ; 30) en raison de la détection d'une erreur de réception dans le message (46) reçu par le bus (40) pendant la phase de données (468) ne doit pas être envoyé sur le bus (40) pendant la phase de données (468) et, sinon, à régler le signal (S_D) à une deuxième valeur prédéterminée, et
un bloc (235) de sélection de signal d'émission pour bloquer le signal d'émission (TX) qui est envoyé par la station d'abonné (10 ; 20 ; 30) établi sur la base de la détection de l'erreur de réception dans le message (46) reçu par le bus (40) pendant la phase de données (468) et destiné à indiquer, avec une trame d'erreur (47) sur le bus (40), l'erreur de réception dans le message (46) reçu par le bus (40), si le signal (S_D) généré par le bloc (233) de décision de protection est fixé à la première valeur prédéterminée, de sorte que la trame d'erreur (47) n'est pas envoyée sur le bus (40), et pour ne pas bloquer le signal d'émission (TX) si le signal (S_D) généré par le bloc (233) de décision de protection est fixé à la deuxième valeur prédéterminée.

2. Unité (130 ; 230 ; 330) de protection contre les trames d'erreur selon la revendication 1,
dans laquelle le bloc (231) de détection de phase de données est configuré de façon à détecter un état sur le bus (40) afin de détecter la phase de données (468).

3. Unité (130 ; 230 ; 330) de protection contre les trames d'erreur selon la revendication 2,
dans laquelle le bloc (231) de détection de phase de données est configuré pour évaluer, pour la détection de la phase de données (468), un signal numérique de réception (RXD1) qui est généré à partir du message (46) reçu par le bus (40).

4. Unité (130 ; 230 ; 330) de protection contre les trames d'erreur selon l'une des revendications précédentes, dans laquelle le bloc (232) de détection d'émetteur est configuré pour évaluer un signal d'émission (TX) émis par la station d'abonné (10 ; 20 ; 30) vers le bus (40).

5. Unité (130 ; 230 ; 330) de protection contre les trames d'erreur selon la revendication 4,
dans laquelle le bloc (232) de détection d'émetteur est configuré de façon à compter les changements de front du signal d'émission (TX) afin d'évaluer le signal d'émission (TX).

6. Unité (130 ; 230 ; 330) de protection contre les trames d'erreur selon la revendication 4 ou la revendication 5,
dans laquelle le bloc (232) de détection d'émetteur est configuré pour effectuer un décodage séquentiel du signal d'émission (TX) afin d'évaluer le signal d'émission (TX).

7. Unité (130 ; 230 ; 330) de protection contre les trames d'erreur selon l'une des revendications 4 à 6,
dans lequel le bloc (232) de détection d'émetteur est configuré pour comparer, pour l'analyse du signal d'émission (TX), le signal d'émission (TX) avec un signal de réception numérique (RXD1) généré à partir du message (46) reçu par le bus (40).

8. Unité (130 ; 230 ; 330) de protection contre les trames d'erreur selon l'une des revendications précédentes,
comprenant en outre un bloc (234) de décision de signal de réception pour décider quel signal de réception (RX) l'unité (130 ; 230 ; 330) de protection contre les trames d'erreur doit transmettre à la station d'abonné (10 ; 20 ; 30),
le bloc (234) de décision de signal de réception étant conçu pour prendre la décision en fonction d'un résultat selon lequel la station d'abonné (10 ; 20 ; 30) transmet ou non une trame d'erreur (47) et en fonction du signal (S_D) généré par le bloc (233) de décision de protection.

9. Unité (130 ; 230 ; 330) de protection contre les trames d'erreur selon l'une des revendications précédentes,
comprenant en outre un bloc (236) de génération de signal d'émission pour générer un signal d'émission (TXD2) dans lequel, après une phase de données (468) du message (46), il est signalé qu'une erreur de réception a été détectée au niveau de la station d'abonné (10 ; 20 ; 30),
le bloc (236) de génération de signal d'émission étant configuré pour générer et émettre le signal d'émission (TXD2) vers le bus (40) si le signal (TX_BL) généré par le bloc (234) de décision de signal de réception indique que la trame d'erreur (47) a été bloquée pour être émise vers le bus (40).

10. Station d'abonné (10 ; 20 ; 30) pour un système de bus série (1), comprenant
un dispositif (11 ; 21 ; 31) de commande de communication pour envoyer un message (45 ; 46) à un bus (40) du système de bus (1) et/ou pour recevoir un message (45 ; 46) du bus (40) du système de bus (1), et
un dispositif d'émission/réception (12 ; 22 ; 32) pour l'émission du message (45 ; 46) sur le bus (40), et
une unité (130 ; 230 ; 330) de protection contre les trames d'erreur selon l'une des revendications précédentes, qui est connectée au dispositif (11 ; 21 ; 31) de commande de communication et au dispositif d'émission/réception (12 ; 22 ; 32),
le dispositif d'émission/réception (22 ; 32) étant conçu pour générer, lors de l'émission avec un premier débit binaire, un premier état de bus (401) pour un premier état de données numériques des messages (45 ; 46) et pour générer un deuxième état de bus (402) pour le deuxième état de données numériques des messages (45 ; 46), de telle sorte que le deuxième état de bus (402) puisse écraser le premier état de bus (401), et
le dispositif d'émission/réception (22 ; 32) étant conçu pour générer, lors de l'émission avec un deuxième débit binaire qui est supérieur au premier débit binaire, différents états de bus (401, 402) de telle sorte que les états de bus (401, 402) pour les différents états de données numériques des messages (45 ; 46) ne peuvent pas s'écraser les uns les autres, et
l'unité (130 ; 230 ; 330) de protection contre les trames d'erreur étant conçue pour détecter le moment où le dispositif d'émission/réception (22 ; 32) passe de l'émission avec le premier débit binaire à l'émission avec le deuxième débit binaire et passe de l'émission avec le deuxième débit binaire à l'émission avec le premier débit binaire.

11. Système de bus (1), comprenant
un bus (40), et
au moins deux stations d'abonnés (20 ; 30) qui sont reliées entre elles par le bus (40) de telle sorte qu'elles soient aptes à communiquer entre elles en série et dont au moins une station d'abonné (20 ; 30) est une station d'abonné (20 ; 30) selon la revendication 10.

12. Système de bus (1) selon la revendication 11,
comprenant en outre au moins une station d'abonné supplémentaire (10) qui, pour la transmission du message (45) sur le bus (40), est uniquement configurée pour générer des états de bus (401, 402) sur le bus (40) dans une première et une deuxième phase de communication du message (45) de telle sorte que le deuxième état de bus (402) puisse écraser le premier état de bus (401),
ladite au moins une station d'abonné supplémentaire (10) étant connectée par le bus (40) auxdites au moins deux stations d'abonnés (20 ; 30) de telle sorte que les stations d'abonnés (10, 20, 30) soient aptes à communiquer entre elles en série,
ladite au moins une station d'abonné supplémentaire (10) comprenant une unité (130 ; 230 ; 330) de protection contre les trames d'erreur selon l'une des revendications 1 à 9,
dans lequel l'unité (130 ; 230 ; 330) de protection contre les trames d'erreur de ladite au moins une station d'abonné (20 ; 30) selon la revendication 9 et de ladite au moins une station d'abonné supplémentaire (10) est conçue de façon à bloquer une trame d'erreur (47) lorsque le signal (S_D) généré par le bloc (233) de décision de protection indique qu'un message (46) est actuellement reçu dans la deuxième phase de communication, dont le format ne peut être compris par un dispositif (11 ; 21 ; 31) de commande de communication de la station d'abonné (10 ; 20 ; 30) en raison d'une erreur, et si le dispositif (11 ; 21 ; 31) de commande de communication de ladite au moins une station d'abonné supplémentaire (10 ; 20 ; 30) tente pendant ce temps d'envoyer une trame d'erreur (47).

13. Procédé de communication dans un système de bus série (1), dans lequel, dans une première phase de communication, pour transmettre un message (45 ; 46) sur un bus (40) du système de bus (1), il est négocié entre les stations d'abonnés (20, 30) du système de bus (1), laquelle des stations d'abonnés (20, 30) a, au moins temporairement, un accès exclusif et sans collision au bus (40) du système de bus (1) dans une deuxième phase de communication suivante, la deuxième phase de communication étant une phase de données (468) dans laquelle des données utiles du message (45 ; 46) sont transmises sur le bus (40), le procédé comprenant les étapes suivantes
émettre, au moyen d'un dispositif d'émission/réception (22 ; 32), des messages (45 ; 46) sur un bus (40) du système de bus (1) et/ou
recevoir, au moyen du dispositif d'émission/réception (22 ; 32), des messages (45 ; 46) provenant du bus (40) du système de bus (1),
détecter, au moyen d'un bloc (231) de détection de phase de données, la phase de données (468) du message (46) transmis en série sur le bus (40),
détecter, avec un bloc (232) de détection d'émetteur, si la station d'abonné (10 ; 20 ; 30) est ou non actuellement l'émetteur du message (45, 46) transmis en série sur le bus (40),
générer, au moyen d'un bloc (233) de décision de protection, un signal (S_D) en réponse à un résultat de détection (NG_DP) du bloc (231) de détection de phase de données et à un résultat de détection (TX_ND) du bloc (232) de détection d'émetteur, le bloc (233) de décision de protection générant le signal (S_D) pendant une transmission de la phase de données (468) d'un message (46) sur le bus (40) du système de bus (1) pour lequel la station d'abonné (10 ; 20 ; 30) n'est pas actuellement l'émetteur, à une première valeur prédéterminée indiquant qu'un signal d'émission (TX) produit par la station d'abonné (10 ; 20 ; 30) en raison de la détection d'une erreur de réception dans le message (46) reçu par le bus (40) pendant la phase de données (468) ne doit pas être émis sur le bus (40) pendant la phase de données (468) et, sinon, fixe le signal (S_D) à une deuxième valeur prédéterminée,
bloquer, au moyen d'un bloc (235) de sélection de signal d'émission, le signal d'émission (TX) envoyé par la station d'abonné (10 ; 20 ; 30), créé sur la base de la détection de l'erreur de réception dans le message (46) reçu par le bus (40) pendant la phase de données (468), et destiné à indiquer, avec une trame d'erreur (47) sur le bus (40), l'erreur de réception dans le message (46) reçu par le bus (40) si le signal (S_D) généré par le bloc (233) de décision de protection est fixé à la première valeur prédéterminée, de sorte que la trame d'erreur (47) n'est pas envoyée sur le bus (40), et
ne pas bloquer le signal d'émission (TX) si le signal (S_D) généré par le bloc (233) de décision de protection est fixé à la deuxième valeur prédéterminée.
